Europäisches Patentamt

European Patent Office

Office européen des brevets

(11) Veröffentlichungsnummer: **0 286 583**
**A2**

(12) **EUROPÄISCHE PATENTANMELDUNG**

(21) Anmeldenummer: 88810082.3

(22) Anmeldetag: 11.02.88

(51) Int. Cl.⁴: **G 05 D 23/19**
. **F 24 F 11/00**

(30) Priorität: 08.04.87 CH 1358/87

(43) Veröffentlichungstag der Anmeldung:
12.10.88 Patentblatt 88/41

(84) Benannte Vertragsstaaten:
AT CH DE FR LI SE

(71) Anmelder: **ELESTA AG ELEKTRONIK**
**Elestastrasse**
**CH-7310 Bad Ragaz (CH)**

(72) Erfinder: **Reiner, Eugen**
**Ringstrasse**
**CH-7324 Vilters (CH)**

**Mauerhofen, Alex**
**Neugutstrasse**
**CH-7324 Vilters (CH)**

(74) Vertreter: **Riederer, Conrad A., Dr.**
**Bahnhofstrasse 10**
**CH-7310 Bad Ragaz (CH)**

(54) Verfahren zum steuerleitungslosen Um-,Zu- oder Abschalten eines Organs einer Heizungs-, Lüftungs-, Klima- oder Wärmepumpenanlage.

(57) Der Regler (R) ist grundsätzlich herkömmlicher Bauart. Er besitzt zur Stromversorgung eines Organs (O) lediglich die Klemmen (O und Ph), so dass er bei einem direkten Anschluss das Organ (O) lediglich ein- oder ausschalten kann. Durch das Vorschaltgerät (V) wird jedoch auch ein zweistufiger Betrieb möglich, indem durch das Relais ($K_1$) die Phase (Ph) von der Klemme (4) auf die Klemme (5) umgeschaltet werden kann. Da samtliche übrige Klemmen des Reglers (R) belegt sind, steht keine Steuerleitung zur Betätigung des Relais ($K_1$) zur Verfügung. Ein Ein- und Ausschalten des Relais ($K_1$) ist aber dennoch möglich, indem über die Speiseleitung für das Organ (O) ein Schaltsignal erzeugt wird, das von einem Detektor (DS) festgestellt wird. Wenn das Relais (K) des Reglers (R) einen Unterbruch von etwa 0,3 Sekunden erzeugt, so stellt dies der Detektor (DS) fest und schaltet das Relais ($K_1$) um, so dass die Stromversorgung des Organs (O) über die Klemme (5) erfolgt. Wenn das Organ (O) z.B. eine Umwälzpumpe ist, läuft diese dann nur noch mit reduzierter Drehzahl. Erfolgt jedoch ein Unterbruch von etwa zwei Sekunden, so stellt dies der Detektor (DS) ebenfalls fest und lässt das Relais ($K_1$) abfallen, so dass die Stromversorgung über die Klemme (4) erfolgt und die Umwälzpumpe (O) wieder mit voller Drehzahl läuft.

Fig. 1

EP 0 286 583 A2

**Beschreibung**

**Verfahren zum steuerleitungslosen Um-, Zu- oder Abschalten eines Organs einer Heizungs-, Lüftungs-, Klima- oder Wärmepumpenanlage**

Die Erfindung bezieht sich auf ein Verfahren zum steuerleitungslosen Umschalten eines mehrstufigen Organs von einer Stufe zur anderen oder zum Zu- oder Abschalten eines zusätzlichen Organs zu bzw. von einem Organ, z.B. einer Heizungs-, Lüftungs-, Klima- oder Wärmepumpenanlage durch ein Regelgerät, welches ein Relais zum An- und Abschalten der Speiseleitung für das oder die genannten Organe enthält.

Heizungs-, Lüftungs-, Klima- und Wärmepumpenanlagen werden in der Regel für eine Maximalbelastung dimensioniert. So erwartet man beispielsweise im schweizerischen Mittelland, dass eine Heizungsanlage bei einer Aussentemperatur von minus 20° C immer noch in der Lage ist, eine Raumtemperatur von plus 20° C zu erzeugen. Da aber während einer Heizperiode im Normalfall nur an wenigen Tagen ein der Nennleistung annähernd entsprechender Wärmebedarf zu verzeichnen ist, werden die Heizanlagen vorwiegend im Teillastbetrieb gefahren. Der effektive Wärmebedarf von Heizungsanlagen wird ausserdem noch weiter vermindert durch schliessende thermostatische Heizkörperventile bei Einflüssen von Fremdwärme, z.B. infolge von Sonneneinstrahlung, Kochwärme oder Kaminfeuer, und durch ganzes oder teilweises Abschalten von Heizkörpern in Schlafzimmern. So ergibt sich denn in der Praxis, dass die meisten Heizungsanlagen während der weitaus grössten Zeit nicht einmal zur Hälfte ausgelastet werden. Unter diesen Umständen erscheint es zweckmässig, den Förderstrom der Umwälzpumpe der Heizungsanlage zu reduzieren. Dabei ist von Interesse, dass die Heizleistung eines Heizkörpers nicht proportional mit der Durchflussmenge abnimmt. So ergibt eine Veränderung der Pumpendrehzahl um 60 Prozent lediglich eine um rund 13 Prozent verminderte Heizleistung. Daraus ergibt sich, dass im schweizerischen Mittelland die Umwälz pumpen von Heizungsanlagen während mindestens zwei Drittel der Betriebszeit mit reduzierter Drehzahl betrieben werden können. Bei reduzierter Drehzahl reduziert sich die Aufnahmeleistung der Pumpe um etwa 40 Prozent.

Der Betrieb der Umwälzpumpe mit verminderter Drehzahl bringt nicht nur eine erhebliche Einsparung an elektrischer Energie, sondern hat auch den Vorteil, dass Strömungsgeräusche vermieden werden, die sonst bei Abschaltung von Heizkörpern in Heizungsanlagen auftreten können.

Im Handel sind bereits Steuergeräte für die automatische zeitabhängige Drehzahlumschaltung von mehrtourigen Pumpen erhältlich. Entsprechende Steuergeräte gibt es auch für die automatische Umschaltung von Zwillingspumpen. Die Umschaltung erfolgt durch eine Schaltuhr. Solche Steuergeräte für Umschaltpumpen sind relativ teuer und haben zudem den Nachteil, dass sie lediglich zeitabhängig schalten, also nur für die sogenannte Nachtabsenkung wirksam sind. Es wäre aber erwünscht, eine Umschaltung der Umwälzpumpe auf eine reduzierte Drehzahl auch dann vorzunehmen, wenn keine tiefen Aussentemperaturen herrschen. Indirekt kann dies bei teuren Ausführungen der beschriebenen Geräte dadurch erreicht werden, dass zusätzlich noch ein Differenzdruckschalter. vorgesehen wird, der dann anspricht, wenn der Durchflusswiderstand der Heizanlage steigt. Dies tritt beispielsweise dann auf, wenn Heizkörper manuell oder durch Thermostatventile abgeschaltet werden.

Grundsätzlich wäre es möglich, dass das Regelgerät der Heizungsanlage die Umschaltung der Umwälzpumpe auf reduzierte Drehzahl vornimmt. Dies könnte nach Kriterien wie milde Aussentemperaturen, niedrige Vorlauftemperaturen geschehen. In den meisten Fällen ist es jedoch aus Platz- und Kompatibilitätsgründen nicht möglich, weitere Relais und Klemmen beim Regelgerät vorzusehen. Solche Aenderungen wären auch mit sehr hohen Kosten für die Aenderung der Hardware und die Werkzeuge verbunden.

Es ist daher Aufgabe der vorliegenden Erfindung, ein Verfahren zu schaffen, das ein steuerleitungsloses Umschalten eines mehrstufigen Organs, z.B. einer Umwälzpumpe, von einer Stufe zur anderen, oder von Wärmepumpen- auf Brennerbetrieb oder von 1-stufigem auf 2-stufigen Brennerbetrieb, ermöglicht. Alternativ soll es ein Zu- oder Abschalten eines zusätzlichen Organs, z.B. einer zweiten Umwälzpumpe, zu einer ersten Umwälzpumpe, ermöglichen.

Gemäss der Erfindung wird diese Aufgabe dadurch gelöst, dass zum Umschalten des mehrstufigen Organs oder zum Zu- oder Abschalten eines zusätzlichen Organs das Regelgerät ein Schaltsignal in der Speiseleitung erzeugt, und dass dieses Schaltsignal benutzt wird, um ein Vorschaltgerät zu steuern, welches die gewünschte Umschaltung des mehrstufigen Organs oder die Zu- oder Abschaltung des zusätzlichen Organs vornimmt. Dieses Verfahren hat den grossen Vorteil, dass das Regelgerät sowohl hardwaremässig wie auch softwaremässig für die Anwendung mit Umwälzpumpen mit oder ohne Drehzahlumschaltung gleich ausgestaltet werden kann. Damit wird eine unerwünschte Typenvielfalt vermieden. Es sind auch keine konstruktiven Aenderungen notwendig. Insbesondere wird im Regelgerät kein zusätzliches Relais benötigt. Auch die Anzahl der Klemmen muss nicht verändert werden, weil keine zusätzliche Klemme notwendig ist. Ein weiterer bedeutender Vorteil des erfindungsgemässen Verfahrens besteht darin, dass kein besonderes Steuergerät mit einer Schaltuhr für die Pumpe notwendig ist. Es genügt vielmehr ein kleines Vorschaltgerät zur Umschaltung der Umwälzpumpe. Dabei ist diese Umschaltung nicht auf eine Nachtabsenkung begrenzt wie bei den bisherigen speziellen Steuergeräten für Umwälzpumpen. Es kann daher eine wesentlich flexiblere und energiesparendere Arbeitsweise der Umwälzpumpe erzielt werden als mit den vorbekannten Steuergeräten für Umwälzpumpen.

Eine vorteilhafte Ausführungsform des Verfahrens sieht vor, dass das Schaltsignal durch einen kurzen Unterbruch des Speisestroms gebildet wird. Dies hat den Vorteil, dass in den meisten Fällen beim Regelgerät lediglich eine Aenderung der Software, nicht aber der Schaltung notwendig wird. Zweckmässigerweise kann durch die Dauer des Unterbruchs die Schaltstellung des Vorschaltgeräts festgelegt werden. So kann beispielsweise durch einen Unterbruch in der Grössenordnung von 0,3 Sekunden die Umschaltung auf eine niedrigere Drehzahl bewirkt werden, währenddem ein Unterbruch in der Grössenordnung von 2 Sekunden eine Rückschaltung auf die hohe Drehzahl bewirkt.

Die Erfindung betrifft auch ein Regelgerät zur Durchführung des Verfahrens. Dieses Regelgerät besitzt in bekannter Weise eine Regelschaltung, Mittel zum Ermitteln der Schaltpunkte für das Umschalten des mehrstufigen Organs von einer Stufe zur andern oder zum Zu- und Abschalten des zusätzlichen Organs, Mittel zum Erzeugen von Schaltsignalen und ein Relais zum An- und Abstellen des Speisestroms für das oder die genannten Organe und ist dadurch gekennzeichnet, dass die Mittel zum Erzeugen von Schaltsignalen die Schaltsignale in der Speiseleitung erzeugen. Dies hat den Vorteil, dass das Regelgerät keine zusätzlichen Klemmen benötigt.

Als Schaltsignal könnte beispielsweise ein tonfrequentes Signal verwendet werden, das dem Netzstrom in der Speiseleitung überlagert wird. Wesentlich vorteilhafter ist jedoch eine Ausführungsform des Regelgeräts, das ein Relais aufweist, welches den Speisestrom je nach der Art des Schaltpunktes, also ob auf eine niedrigere oder höhere Drehzahl umgeschaltet werden muss, kürzere oder längere Zeit unterbricht.

Da aber im Regelgerät ohnehin ein Relais zum An- und Abschalten des Speisestroms vorhanden ist, sieht eine besonders vorteilhafte Ausführungsform vor, dass dieses Relais auch der Erzeugung von Schaltsignalen in der Speiseleitung dient. Dies macht es möglich, ein an und für sich bekanntes Regelgerät durch eine Softwareänderung so zu ändern, dass es sich zur Durchführung des erfindungsgemässen Verfahrens eignet.

Die Erfindung betrifft schliesslich auch ein Vorschaltgerät zur Durchführung des erfindungsgemässen Verfahrens. Dieses Vorschaltgerät weist erfindungsgemäss einen Detektor zur Feststellung des Auftretens und der Art eines Schaltsignals auf und besitzt eine Relaisstufe zum Umschalten des Speisestroms von einer Stufe zur anderen im Falle eines mehrstufigen Organs oder zum Zu- oder Abschalten des Speisestroms im Falle eines zusätzlichen Organs. Im Gegensatz zu den bekannten Steuergeräten für Umwälzpumpen ist dieses Vorschaltgerät wesentlich billiger, da es weder eine spezielle Schaltuhr braucht, noch auf Sonderausführungen von z.B. drehzahlumschaltbaren Pumpen mit integrierter Steuerelektronik angewiesen ist.

Eine Ausführungsform des Vorschaltgeräts besitzt eine Gleichstromquelle für den Detektor und die Relaisstufe. Der Detektor enthält einen Verstärker und die Relaisstufe einen Schalttransistor, der vom Verstärker geschaltet wird. Dies ergibt einen sehr kostengünstigen Aufbau des Vorschaltgeräts.

Eine vorteilhafte Ausführungsform des Vorschaltgeräts sieht ferner vor, dass der Verstärker ein Operationsverstärker ist, dessen invertierender Eingang an eine Widerstandsbrücke mit einem ersten und einem zweiten Widerstand angeschlossen ist, währenddem an den nicht-invertierenden Eingang ein Kondensator und ein parallel dazu angeordneter, im Verhältnis zum ersten und zum zweiten Widerstand hochohmiger dritter Widerstand geschaltet ist, und dass der invertierende Eingang des Operationsverstärkers mit dem nicht-invertierenden Eingang über eine Diode verbunden ist. Diese Schaltung ist sehr einfach im Aufbau und betriebssicher.

Ein Ausführungsbeispiel der Erfindung wird nun unter Bezugnahme auf die Zeichnung beschrieben. Es zeigt:

Fig. 1 den Regler, das Vorschaltgerät und das zu steuernde mehrstufige Organ,

Fig. 2 den Anschluss für zwei Organe, welche vom Vorschaltgerät abwechslungsweise in Betrieb gesetzt werden können,

Fig. 3 den Anschluss von zwei Organen, wobei eines davon vom Vorschaltgerät zu- und abgeschaltet werden kann.

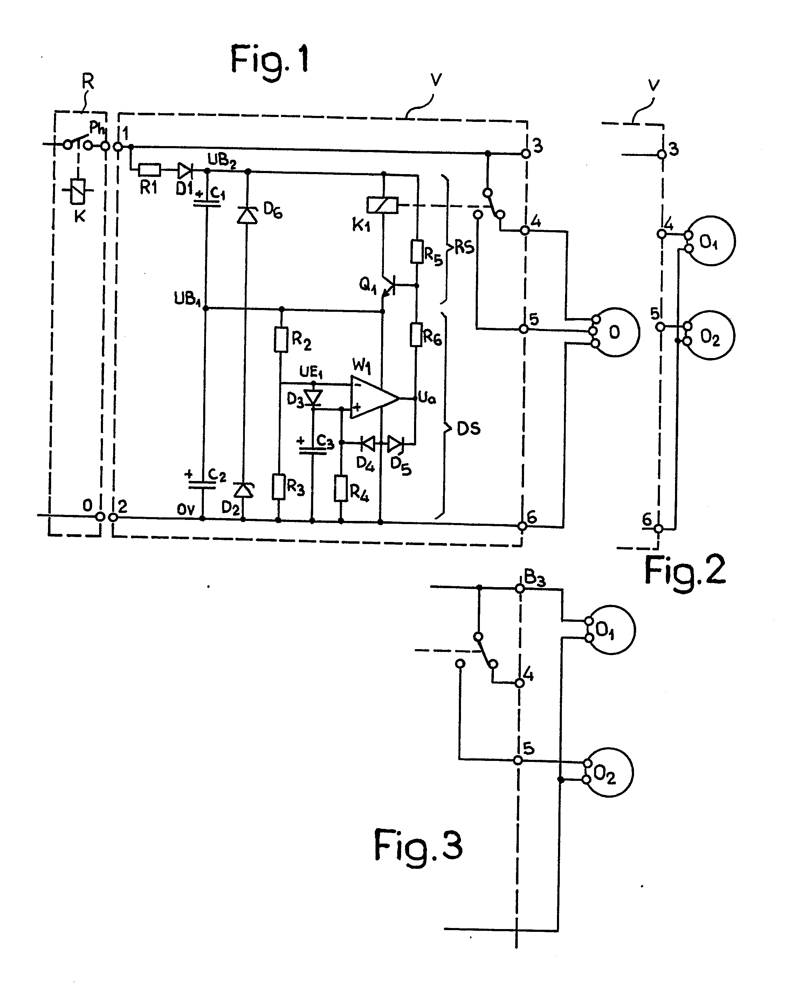

Die schematische Darstellung von Figur 1 zeigt den Regler R, das Vorschaltgerät V und das zweistufige Organ O, das z.B. eine zweitourige Heizungsumwälzpumpe ist. Es könnte sich aber auch um ein anderes zweistufiges Organ, z.B. um einen zweistufigen Brenner oder eine zweistufige Wärmepumpe, handeln, der bzw. die vom Regler R gesteuert wird. Der Regler R ist vorzugsweise ein Regler digitaler Bauart. Solche Regler finden heute in Heizungs-, Lüftungs-, Klima- und Wärmepumpenanlagen Verwendung. Detaillierte Kenntnisse der Funktionsweise des Reglers R sind für das Verständnis der vorliegenden Erfindung nicht erforderlich. Es ist aber zu beachten, dass die Netzspannung dem mehrstufigen Organ O über den Regler R zugeführt wird. Zu diesem Zweck sind die Klemmen O und Ph des Reglers R mit den Klemmen 1 und 2 des Vorschaltgeräts V verbunden. Der Nulleiter O führt somit über die Eingangsklemme 2 zur Ausgangsklemme 6 des Vorschaltgeräts, währenddem die Phase Ph über die Eingangsklemme 1 zur Ausgangsklemme 3 des Vorschaltgeräts führt. Die Phase des Netzstroms liegt jedoch nur an der Klemme 1 an, wenn der Kontakt des Relais K des Reglers geschlossen hat. Hat dieser Kontakt geschlossen, so läuft die Umwälzpumpe O. Ob sie mit reduzierter oder voller Geschw-ndigkeit läuft, hängt dann von der Stellung des Kontakts des Relais $K_1$ des Vorschaltgeräts V ab. In der eingezeichneten Stellung des Kontakts des Relais $K_1$ erfolgt die Stromzufuhr über die Klemme 4, so dass die Umwälzpumpe O mit voller Geschwindigkeit läuft. In der umgeschalteten Stellung des Kontakts des Relais $K_1$ erfolgt die Stromzufuhr über die Klemme 5, so dass die Umwälzpumpe O mit reduzierter Geschwindigkeit läuft.

Nachfolgend wird nun die Vorschalteinheit V näher beschrieben. Der untere Teil der Schaltung stellt die Detektorschaltung DS dar, währenddem der obere Teil der Schaltung die Relaisschaltstufe RS darstellt. Die Gleichstromquelle für die Schaltungsteile DS und RS wird durch den Widerstand $R_1$, den Gleichrichter $D_1$, den Kondensator $C_1$, den Kondensator $C_2$ sowie die Zenerdioden $D_6$ und $D_2$ gebildet. Die Kondensatoren $C_1$ und $C_2$ und die Zenerdioden sind je in Serie mit dem Widerstand $R_1$ und dem Gleichrichter $D_1$ zwischen die Klemmen 1 und 2 geschaltet. Durch die Zenerdiode $D_2$ wird die Spannung $U_{B1}$ auf einen definierten Wert begrenzt. Ebenso wird durch die Zenerdiode $D_6$ die Spannung $U_{B2}$ auf einen definierten Wert begrenzt. Die Detektorschaltung DS enthält einen Operationsverstärker $W_1$, dessen invertierender Eingang an eine Widerstandsbrücke mit den Widerständen $R_2$ und $R_3$ angeschlossen ist. Der nicht-invertierende Eingang des Operationsverstärkers $W_1$ ist über den Kondensator $C_3$ und den parallel dazu angeschlossenen Widerstand $R_4$ mit der Klemme 2 verbunden. Der Widerstand $R_4$ ist verglichen zum Widerstand $R_2$ und $R_3$ wesentlich hochohmiger. Zwischen den Eingängen des Operationsverstärkers liegt ferner die Diode $D_3$.

Zwischen dem Ausgang des Operationsverstärkers $W_1$ und dem nicht-invertierenden Eingang liegt die Diode $D_4$ und die Zenerdiode $D_5$. Der Ausgang des Operationsverstärkers $W_1$ dient der Steuerung des Transistors $Q_1$, der mit der Basis an die Verbindung der Widerstände $R_5$ und $R_6$ angeschlossen ist. Wenn der Transistor $Q_1$ schaltet, zieht das Relais $K_1$ auf und schaltet seinen Kontakt um.

Im Betrieb der Heizungsanlage wird die Umwälzpumpe O durch den Regler R und das Vorschaltgerät V wie folgt gesteuert:

Solange das Regelgerät R einen Wärmebedarf feststellt, ist das Relais K erregt und hat somit seinen Kontakt geschlossen. Es wird somit die Speisespannung über die Klemmen 4 und 6 an die Umwälzpumpe O angelegt, welche dann mit voller Drehzahl läuft. Dies ist auch immer bei der Inbetriebnahme der Heizungsanlage der Fall, auch wenn der Heizbedarf relativ gering ist. Dadurch wird sichergestellt, dass die Umwälzpumpe O richtig anläuft. Stellt nun das Regelgerät R einen verminderten Heizbedarf fest, so fällt das Relais K kurzfristig ab, so dass die Speisespannung für etwa 0,3 Sekunden unterbrochen wird. Dieser Unterbruch wird also so gewählt, dass die Umwälzpumpe bis zum Wiedereinschalten der Speisespannung nicht ganz zum Stillstand kommt. Es entstehen daher keine Anlaufprobleme. Andererseits ist der Unterbruch lang genug, dass sich kurzfristige Netzunterbrüche, wie sie oft beim Einschalten motorischer Lasten entstehen, nicht als Störungen auswirken.

Ein Unterbruch von 0,3 Sekunden bewirkt, wie nachfolgend noch näher beschrieben wird, dass das Relais $K_1$ aufzieht und seinen Kontakt umschaltet. Die Umwälzpumpe wird daher über die Klemme 5 mit Strom versorgt, so dass diese nur noch mit reduzierter Drehzahl läuft. Stellt das Regelgerät R nach einiger Zeit wieder einen erhöhten Heizbedarf fest, der die volle Drehzahl der Umwälzpumpe O erfordert, so lässt er das Relais K für etwa zwei Sekunden abfallen. Wie nachher noch näher beschrieben wird, bewirkt dies ein Abfallen des Relais $K_1$ des Vorschaltgeräts, so dass sein Kontakt wieder in die Ruhelage zurückkehrt. Wenn somit das Relais K des Regelgeräts wieder anzieht, erfolgt die Stromversorgung der Umwälzpumpe O wiederum über die Klemme 4, so dass diese mit voller Drehzahl läuft.

Die Wirkungsweise der Schaltung des Vorschaltgeräts ist wie folgt:

Vor dem Anlegen der Speisespannung nach vorgängig genügend langem spannungslosem Zustand sind die Kondensatoren $C_1$, $C_2$ und $C_3$ völlig entladen. Wird nun die Speisespannung angelegt, so erfolgt die Aufladung der Kondensatoren $C_1$ und $C_2$ über den Widerstand $R_1$ und den Gleichrichter $D_1$. Der Kondensator $C_2$ wird dabei kontinuierlich bis zur Detektorspeisespannung $U_{B1}$ aufgeladen. Die Spannung $U_{B1}$ wird durch die Zenerdiode $D_2$ auf einen definierten Wert begrenzt. Der Verstärker $W_1$ erhält während dieser Aufladung am invertierenden Eingang die Spannung $U_{E1}$, welche

$$\approx \frac{U_{B1} \cdot R_3}{R_2 + R_3}.$$

Die Vergleichsspannung $U_{E2}$ wird über die Diode $D_3$ von der Spannung $U_{E1}$ abgeleitet, woraus sich ergibt, dass während des Aufladevorgangs und nach Erreichen des Maximalwerts von $U_{B1}$ bis zu einem erneuten Unterbruch die Spannung $U_{E2}$ zu jedem Zeitpunkt tiefer als $U_{E1}$ ist und somit die Ausgangsspannung des Verstärkers $W_1$ auf Null bleibt. Infolgedessen bleibt der Transistor $Q_1$ nicht leitend und das Relais $K_1$ zieht nicht auf. Sein Kontakt bleibt daher in der eingezeichneten Lage, so dass die Stromversorgung der Umwälzpumpe über die Klemme 4 erfolgt. Die Umwälzpumpe O dreht daher mit voller Drehzahl.

Sinkt der Heizbedarf, so dass die Umwälzpumpe O nicht mehr mit voller Drehzahl drehen muss, so wird die Speisespannung durch das Relais K des Regelgeräts R kurzzeitig unterbrochen. Damit fällt die Spannund $U_{B1}$ und damit proportional auch die Spannung $U_{E1}$ entsprechend einer durch den Kondensator $C_2$ und der Summe der an $U_{B1}$ liegenden Verbraucher, nämlich den Widerständen $R_1$ bis $R_4$ und des Verstärkers $W_1$, mit einer relativ kleinen Zeitkonstante ab, während die Spannung $U_{E2}$ mit einer relativ grösseren Zeitkonstanten entsprechend der Dimensionierung des Kondensators $C_2$ und des Widerstands $R_4$ nur langsam abfällt. Die Spannung $U_{E1}$ unterschreitet daher zu einem bestimmten Zeitpunkt die Spannung $U_{E2}$, so dass die Ausgangsspannung $U_a$ des Verstärkers $W_1$ auf nahezu den Wert der Spannung $U_{B1}$ ansteigt. Der Transistor $Q_1$ wird daher leitend und das Relais $K_1$ zieht auf, um den Kontakt zu schalten. Ueber die Zenerdiode $D_5$ und die Diode $D_4$ wird $C_3$ sehr rasch auf einen Spannungswert $U_{B1}$ minus $U_{D5}$ minus $U_{D4}$ aufgeladen. Dieser Spannungswert ist höher als der Spannungswert, welchen $U_{E1}$ in Funktion von $U_{B1}$ je erreichen kann. Zu diesem Zeitpunkt, also nach einem Unterbruch von ungefähr 0,3 Sekunden, wird die Speisespannung wieder angelegt. Infolgedessen bleibt der beschriebene Schaltzustand erhalten, bis ein wesentlich längerer Unterbruch erfolgt. Dies ist der Fall, wenn der Regler einen erhöhten Heizbedarf feststellt und das Relais K veranlasst, für etwa zwei Sekunden abzufallen. Dadurch entsteht ein spannungsloser Zustand, in welchem der ursprüngliche Startzustand annähernd wieder erreicht wird, also, wie eingangs beschrieben, die Kondensatoren $C_1$, $C_2$ und $C_3$ genügend entladen sind. Nach dem relativ langen Unterbruch von zwei Sekunden befindet sich der Kontakt des Relais $K_1$ wieder in der eingezeichneten Lage, so dass die Umwälzpumpe wieder über die Klemme 4 mit Strom versorgt wird und somit wieder auf voller Drehzahl läuft.

Aus der vorangehenden Betrachtung ergibt sich, dass der zum Umschalten auf niedrigere Drehzahl verwendete Spannungsunterbruch nur so lange dauern darf, dass $U_{B1}$ immer noch wesentlich über der Spannung $U_{E1}$ + der Durchlassspannungen der Dioden $D_4$ und $D_5$ liegt.

Im vorangehenden Ausführungsbeispiel von Figur 1 wurde die Umschaltung eines mehrstufigen Organs beschrieben. Wie Figur 2 zeigt, kann die Erfindung auch zum Umschalten von einem Organ $O_1$ zu einem anderen Organ $O_2$ verwendet werden. Figur 3 zeigt schliesslich, wie zusätzlich zu einem Organ $O_1$ ein weiteres Organ $O_2$ zugeschaltet werden kann.

## Patentansprüche

1. Verfahren zum steuerleitungslosen Umschalten von einem Organ ($O_1$) zu einem anderen ($O_2$), oder eines mehrstufigen Organs (O) von einer Stufe zur andern oder zum Zu- oder Abschalten eines zusätzlichen Organs ($O_2$) zu bzw. von einem Organ ($O_1$),z.B. einer Heizungs-, Lüftungs-,Klima-oder Wärmepumpenanlage durch ein Regelgerät (R), welches ein Relais (K) zum An- und Abschalten der Speiseleitung für das oder die genannten Organe ($O_1$, $O_2$) enthält, dadurch gekennzeichnet, dass zum Umschalten von einem Organ ($O_1$) zum andern oder des mehrstufigen Organs (O) oder zum Zuoder Abschalten eines zusätzlichen Organs ($O_2$) das Regelgerät (R) ein Schaltsignal in der Speiseleitung (Ph) erzeugt, und dass dieses Schaltsignal benutzt wird, um ein Vorschaltgerät (V) zu steuern, welches die gewünschte Umschaltung von einem Organ zum andern oder des mehrstufigen Organs oder die Zu- oder Abschaltung des zusätzlichen Organs vornimmt.

2. Verfahren nach Anspruch 1, dadurch gekennzeichnet, dass das Schaltsignal durch einen kurzen Unterbruch des Speisestroms gebildet wird.

3. Verfahren nach Anspruch 2, dadurch gekennzeichnet, dass durch die Dauer des Unterbruchs die Schaltstellung des Vorschaltgeräts festgelegt wird.

4. Verfahren nach Anspruch 3, dadurch gekennzeichnet, dass ein erstes Schaltsignal durch einen Unterbruch in der Grössenordnung von 0,3 Sekunden gebildet wird.

5. Verfahren nach Anspruch 3 oder 4, dadurch gekennzeichnet, dass ein zweites Schaltsignal durch einen Unterbruch in der Grössenordnung von zwei Sekunden gebildet wird.

6. Regelgerät zur Durchführung des Verfahrens nach einem der Ansprüche 1 bis 5, mit einer Regelschaltung, Mitteln zum Ermitteln der Schaltpunkte für das Umschalten von einem Organ ($O_1$) zum anderen ($O_2$) oder des mehrstufigen Organs (O) von einer Stufe zur andern oder zum Zu- und Abschalten des zusätzlichen Organs ($O_2$), Mitteln zum Erzeugen von Schaltsignalen und einem Relais (K) zum An- und Abschalten des Speisestroms für das oder die genannten Organe, dadurch gekennzeichnet, dass die Mittel (K) zum Erzeugen von Schaltsignalen die Schaltsignale in der Speiseleitung erzeugen.

7. Regelgerät nach Anspruch 6, dadurch gekennzeichnet, dass es ein Relais aufweist, welches den Speisestrom je nach der Art des Schaltpunktes kürzere oder längere Zeit unterbricht.

8. Regelgerät nach Anspruch 7, dadurch gekennzeichnet, dass das Relais (K) zum Anund Abstellen des Speisestroms für das oder die genannten Organe (O, $O_1$, $O_2$) auch für die Erzeugung von Schaltsignalen in der Speiseleitung (Ph) dient.

9. Vorschaltgerät zur Durchführung des Verfahrens nach einem der Ansprüche 1 bis 5, gekennzeichnet durch einen Detektor (DS) zur Feststellung des Auftretens und der Art eines Schaltsignals und einer Relaisstufe (RS) zum Umschalten des Speisestroms von einem Organ ($O_1$) zum andern ($O_2$) oder von einer Stufe zur andern im Falle eines mehrstufigen Organs (O) oder zum Zu- oder Abschalten des Speisestroms im Falle eines zusätzlichen Organs ($O_2$).

10. Vorschaltgerät nach Anspruch 9, dadurch gekennzeichnet, dass eine Gleichstromquelle ($R_1$, $D_1$, $C_2$, $D_2$, $D_6$) vorgesehen ist, dass der Detektor (DS) einen Verstärker ($W_1$) enthält, und dass die Relaisstufe (RS) einen Schalttransistor ($Q_1$) aufweist, der vom Verstärker ($W_1$) gesteuert wird.

11. Vorschaltgerät nach Anspruch 10, dadurch gekennzeichnet, dass der Verstärker ($W_1$) ein Operationsverstärker ist, dessen invertierender Eingang an eine Widerstandsbrücke (R) mit einem ersten und einem zweiten Widerstand ($R_2$, $R_3$) angeschlossen ist, währenddem an den nicht invertierenden Eingang ein Kondensator ($C_3$) und ein parallel dazu angeordneter, im Verhältniszum ersten und zum zweiten Widerstand ($R_2$, $R_3$) hochohmiger dritter Widerstand ($R_4$) geschaltet ist, und dass der invertierende Eingang des Operationsverstärkers ($W_1$) mit dem nicht invertierenden Eingang über eine Diode (D₃) verbunden ist.

Fig.1

Fig.2

Fig.3

0286583